# EUROPEAN PATENT SPECIFICATION

(11) **EP 1 291 482 B1**
(45) Date of publication and mention of the grant of the patent: **26.05.2004**
(21) Application number: 02256242.5
(22) Date of filing: 10.09.2002
(51) Int. Cl.: E05D 11/08, E05F 1/12

(54) **Hinge**
Scharnier
Charnière

(30) Priority: 11.09.2001 KR 2001055731
(43) Date of publication of application: 12.03.2003
(60) Divisional application: 03022069.3
(73) Proprietor: SAMSUNG ELECTRONICS CO., LTD., Suwon-City, Kyungki-do (KR)
(72) Inventor: Choi, Kang-ho, Yongin-city, Gyunggi-do (KR)
(74) Representative: Geary, Stuart Lloyd

(56) References cited:
- WO-A-95/33392
- US-A- 5 028 913
- US-A- 5 970 580

## Description

The present invention relates to a hinge comprising first and second means for connecting the hinge to first and second structures, a shaft fixed to said first means and about which the second means can rotate, brake means for holding the first and second means to enable the first and second means to be set in position relative to each other and means arranged such that the brake means becomes operative at a predetermined angle between the first and second means.

Recently, there has been a great improvement in and marketing of folding electronic appliances such as camcorders and laptop. computers.in which an LCD panel is hinged to the appliance's body.

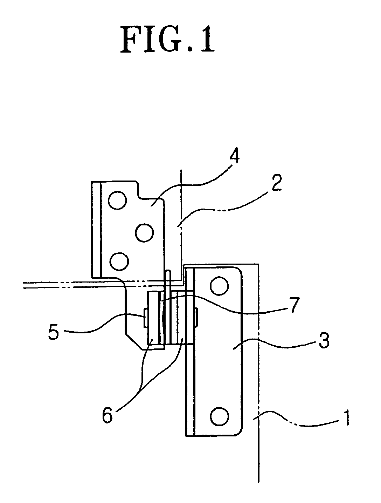

Figure 1 shows an example of a conventional hinge apparatus employed in a laptop computer. As shown in Figure 1, the hinge apparatus includes a fixing bracket 3 disposed on a body 1, a. supporting bracket 4 fixed to a panel 2 that is opened and closed with respect to the body 1, a hinge shaft 5 connected to the fixing bracket 3 and the supporting bracket 4, a plurality of washers 6 disposed on the hinge shaft 5 and a plate spring 7.

In the above-described configuration, the supporting bracket 4 is connected between the washers 6, while the plate spring 7 is connected between the supporting shaft 4 and the washers 6. Accordingly, due to the elastic force of the plate spring 7, a frictional force is generated between the supporting shaft 4 and the washers 6. Due to the frictional force, the panel 2 is prevented from pivoting freely with respect to the body 1 when the appliance is open or closed. When the panel 2 is opened with respect to the body 1 by a predetermined angle, the panel 2 is fixed in its position by the frictional force. More specifically, a user may adjust the angle of the panel 2 with respect to the body 1 moving the panel 2 up or down manually.

The above-described configuration is one of typical examples of the hinge apparatus, which needs an improvement in terms of handling. That is, even when a locking device, for holding the appliance closed, is released, the panel 2 remains tightly contacted with the body 1 and it is hard for the user to open the panel 2 manually.

Self-opening hinges with brakes for holding the hinges open at different angles are disclosed in US-A-5028913 and WO-A-95/33392.

A hinge according to the present invention is characterised in that the brake means is mounted for rotation with the second means and comprises a projection, and the means arranged such that the brake means becomes operative at a predetermined angle comprises a member fixed relative to the shaft and having a slot or cut-out for receiving said projection when the hinge is opened less than said predetermined angle, said projection bearing against said member to provide braking when the hinge is opened by said predetermined angle or a greater angle.

Preferred and optional features are set forth in claims 2 to 13 appended hereto.

An embodiment of the present invention will now be described, by way of example, with reference to Figures 2 to 7 of the accompanying drawings, in which:
Figure 1 is a schematic view showing a conventional hinge;
Figure 2 is an exploded view of a hinge according to the present invention;
Figure 3 is a perspective view showing the hinge of Figure 2;
Figures 4A and 4B are a side view and a front view, respectively, showing the hinge of Figure 2 in its closed state;
Figure 5 is a side view showing a supporting bracket of the hinge of Figure 2 rotated by approximately 45°;
Figures 6A and 6B are a side view and a front view, respectively, showing the supporting bracket being rotated by approximately 180°; and
Figure 7 is a schematic side view showing the supporting bracket being rotated by approximately 210°.

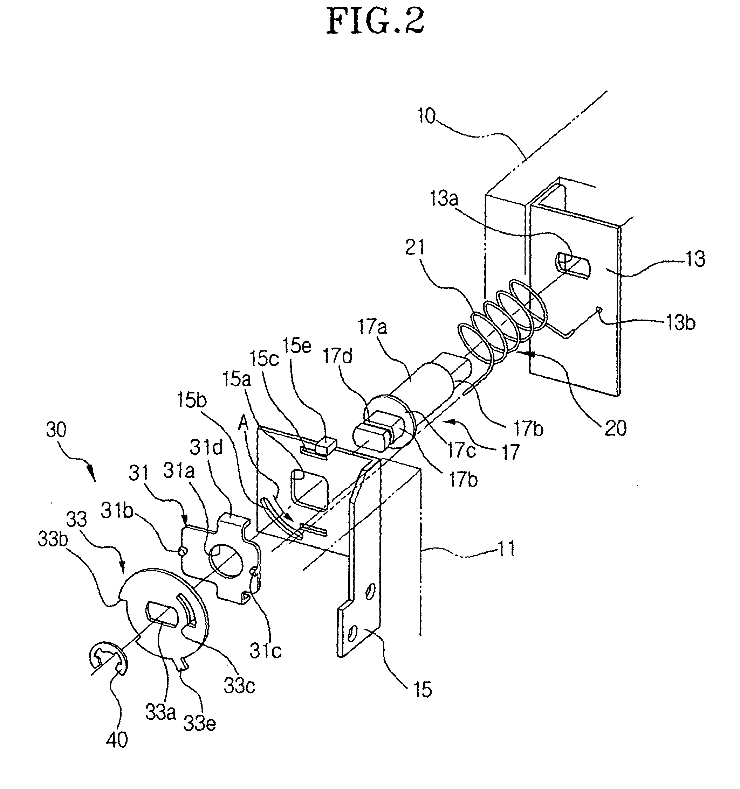

Referring to Figure 2, a hinge according to the present invention is employed to connect a panel 11 to a body 10 of an appliance so that the panel 11 can be opened and closed with respect to the body 10. The hinge apparatus includes a fixing bracket 13 fixed onto the body 10, a supporting bracket 15 fixed to the panel 11, a hinge shaft 17, an automatic pivot unit 20, a manual pivot unit 30, and a fixing pin 40.

A laptop computer will be used herein as an example of appliance in which a hinge according to the present invention, and accordingly, the body 10 is the laptop computer body, and the panel 11 is an LCD panel of the laptop computer. A general locking device is disposed between the body 10 and the panel 11. Accordingly, when a user desires to open the panel 11 with respect to the body 10, he/she may open it after releasing the locking device.

The fixing bracket 13 is fixed onto the body 10 by screws (not shown). The fixing bracket 13 has a fixing hole 13a through which the hinge shaft 17 is fixed, and a supporting hole 13b to which one end of a coil spring 21, which will be described later, is fixed. The fixing hole 13a is non-circular.

The supporting bracket 15 is fixed to the panel 11 by screws (not shown). The supporting bracket 15 faces the fixing bracket 13 at a predetermined distance. Also, the supporting bracket 15 has a shaft hole 15a through which the hinge shaft 17 extends, and a guide hole 15b in which the other end of the coil spring 21 is received. The shaft hole 15a may be circular or non-circular and is larger than an outer circumference of the hinge shaft 17 to that the hinge shaft 17 can move freely therein. With the hinge shaft 17 extending through the shaft hole 15a, the supporting bracket 15 can be rotated relative to the hinge shaft 17.

The hinge shaft 17 includes a body 17a, having a circular cross-section in its middle, non-circular cross-section fixing portions 17b extending from both ends of the body 17a, and a supporting portion 17c extending between one of the fixing portion 17b and the body 17a. The body 17a is connected to the coil spring 21. The fixing portion 17b is inserted into the fixing hole 13a and the shaft hole 15a. The free end of the fixing portion 17b, inserted through the shaft hole 15a, has a circumferential groove 17d for receiving the circlip 40. The other end 17b is inserted into the fixing hole 13a of the fixing bracket 13 and then completely fixed by being caulked by a caulking device. Alternatively, this end of the fixing portion 17b may also be fastened by a circlip 40.

The automatic pivot unit 20 is employed so that the panel 11 can open with respect to the body 10 automatically by a predetermined angle when the locking device is released. The automatic pivot unit 20 includes the coil spring 21, disposed on the hinge shaft 17, which elastically biases the panel 11 towards an open position with respect to the body 10. The guide hole 15b formed in the supporting bracket 15 is also part of the automatic pivot unit 20.

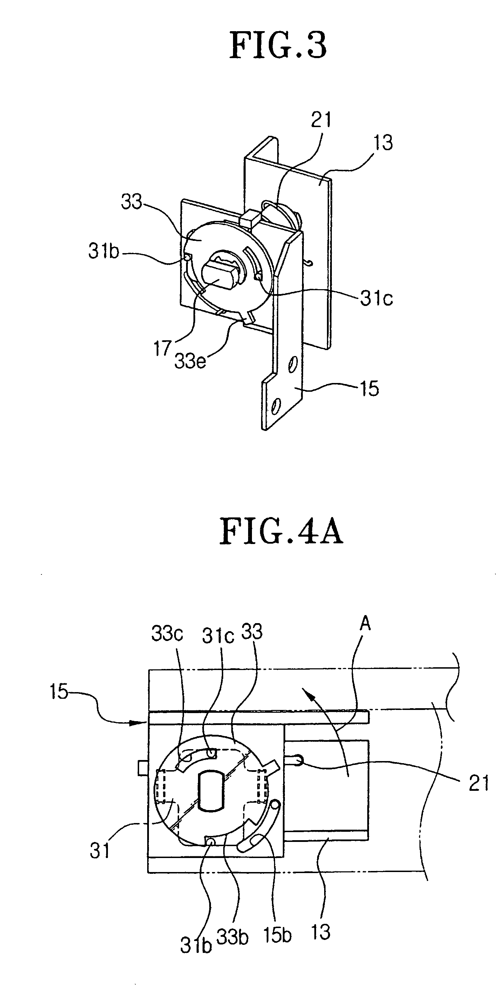

As described above, one end of the coil spring 21 is received in the supporting hole 13b of the fixing bracket 13, while the other end is received in the guide hole 15b of the supporting bracket 15. Thus, when the panel 11 lying parallel to the body 10, the coil spring 21 is under tension. Accordingly, the supporting bracket 15 is pressed in a direction as indicated by an arrow A as shown in Figure 4A. The direction as shown, indicates the opening of the panel 11 with respect to the body 10. When the locking device, holding the panel 11 and the body 10 closed, is released, the supporting bracket 15 is automatically pivoted by a predetermined angle in the direction of the arrow A by the coil spring 21. When the coil spring 21 is fully relaxed and the torsion becomes zero (0), the other end of the coil spring 21 is guided along the guide hole 15b instead of being compressed or decompressed by the supporting bracket 15 in the event that the supporting bracket 15 is further pivoted in the A direction. The torsion of the coil spring 21 is set at an appropriate level so that the panel 11 is automatically opened with respect to the body 10 by an angle of approximately 45°. The guide hole 15b is formed so as to have an appropriate length to correspond to the automatic opening angle of the panel 11.

The manual pivot unit 30 restricts the angle of automatic rotation of the supporting bracket 15 by the automatic pivot unit 20. The manual pivot unit 30 also provides a frictional force between the supporting bracket 15 and the hinge shaft 17 to fix the supporting bracket 15 in a fixed position. The supporting bracket 15 is further opened by an external force from the automatic opening angle. The manual pivot unit 30 has a plate spring 31 fixed on the supporting bracket 15, and a friction plate 33 fixed on the hinge shaft 17 in tight contact with the plate spring 31. The plate spring 31 has a shaft hole 31a a through which the hinge shaft 17 is passed, a pair of projections 31b, 31c protruding from one side of the plate spring 31, and a coupling portion 31d bent from a portion of an outline of the plate spring 31 opposite to the projections 31b, 31c. The plate spring 31 is fixed onto the supporting bracket 15 and rotated together with the supporting bracket 15. The shaft hole 31 a has a circular shape. The projections 31b, 31c protrude from the one side of the plate spring 31. The projections 31b, 31c are also positioned such that their respective distances from the projections 31b, 31c to the shaft hole 31a are different. A coupling portion 31 d is positioned to be fixed in a coupling hole 15c that is formed in the supporting bracket 15. Accordingly, the plate spring 31 is fixed onto the supporting bracket 15 and rotated together with the supporting bracket 15.

The friction plate 33 is formed in tight contact with one surface of the plate spring 31. The friction plate 33 has a coupling hole 33a corresponding to a section of the fixing portion 17b so as to be connected to, and rotated together with the fixing portion 17b of the hinge shaft 17. The frictional plate 33 also has guide holes 33b, 33c corresponding to the projections 31b, 31c of the plate spring 31. Each of the guide holes 33b, 33c receives one of the projections 31b, 31c to guide movement of the projections 31b, 31c. The guide holes 33b, 33c are formed at different distances with respect to the coupling hole 33a. Accordingly, when the plate spring 31 is rotated through said predetermined angle, by the coil spring 21, with the projections 31b, 31c inserted in the guide holes 33b, 33c, there is no frictional force between the frictional plate 33 and the plate spring 31. When the projections 31b, 31c are guided to ends of the guide holes 33b, 33c, free rotation of the supporting bracket 15 is restricted. Then, as the supporting bracket 15 is forcibly rotated by an externally applied force, the projections 31b, 31c are released from the guide holes 33b, 33c to a direct contact with the frictional plate 33, thereby generating a frictional force. Accordingly, the supporting bracket 15 is rotated through an angle of free rotation by the external force. Once the supporting bracket is rotated beyond the angle of the free rotation, the supporting bracket 15 is fixed in its position.

Here, the supporting bracket 15, the plate spring 31 and the frictional plate 33 are connected to come into tight contact with the supporting portion 17c of the hinge shaft 17 sequentially. Separation from the hinge shaft 17 is prevented by the fixing pin 40.

Further provided is a pivoting angle restricting device to restrict the angle of rotation of the supporting bracket 15. The pivoting angle restricting device includes a locking portion 33e protruding from an outline of the frictional plate 33, and a locking projection 15e bent from an outline of the supporting bracket 15 to be locked with the locking portion 33e during rotation. The locking portion 33e is formed in a position that restricts the pivoting angle of the supporting bracket 15 at a predetermined degree of, for example, 210°.

An operation of the hinge will now be described.

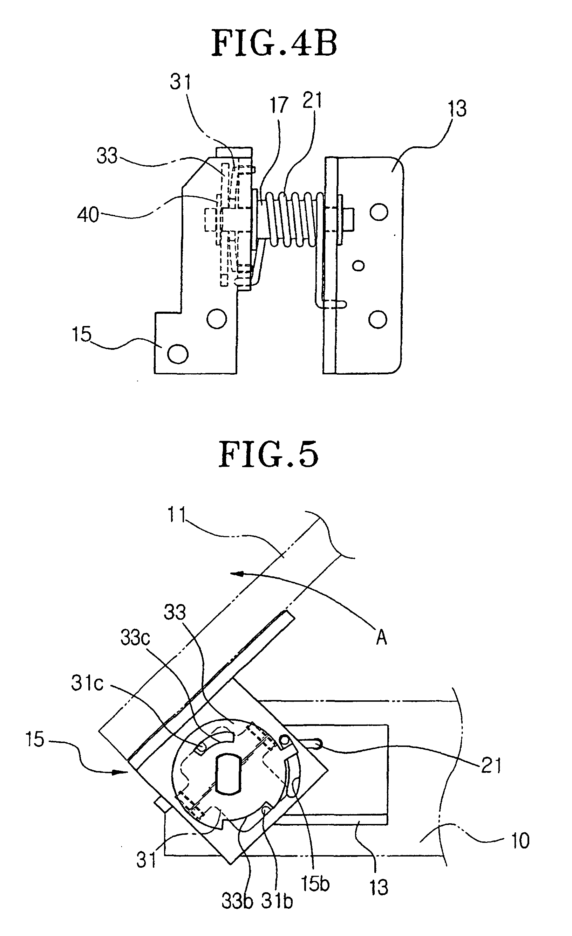

Referring to Figures 4A and 4B, the projections 31b, 31c of the plate spring 31 arc inserted into the guide holes 33b, 33c of the friction plate 33. One end of the coil spring 21 is received at one end of the guide hole 15b. Accordingly, the supporting bracket 15 is resiliently biased in the direction A (as shown in Figure 4A) by the torsion of the coil spring 21.

When the locking device, between the body 10 and the panel 11, is released, as shown in Figure 5, the supporting bracket 15 is automatically pivoted by approximately 45°, for example, by the coil spring 21. Since the lengths of the guide holes 33b, 33c correspond to an angle of 45°, the projections 31b, 31c are guided along the guide holes 33b, 33c through 45° without being interfered by frictional force or resistance. When the supporting bracket 15 is automatically pivoted (opened) by approximately 45° together with the panel 11, the projections 31b, 31c are moved to the other ends of the guide holes 33b, 33c. Thus, the free rotation of the supporting bracket 15 is restricted. Together with the fixing bracket 13, the hinge shaft 17 and the frictional plate 33 are in fixed positions with respect to the body 10. The supporting bracket 15 and the plate spring 31 are pivoted in the A direction (as shown in Figure 4A) together with the panel 11.

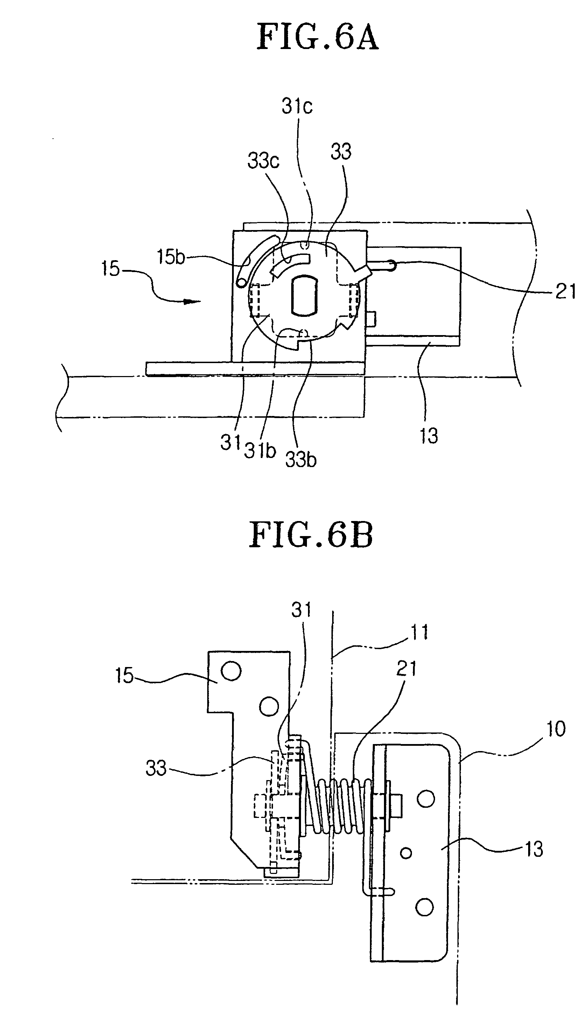

The panel 11 is moved to the state as shown in Figures 6A and 6B when the panel 11 is forcibly pivoted in the A direction as shown in Figure 5 by approximately 180°. Movement by a user in addition to the free rotation angle of 45° allows for the panel 11 to be positioned in the state as shown in Figures 6A and 6B. Accordingly, the projections 31b, 31c of the plate spring 31 escape from the guide holes 33b, 33c and are positioned in contact with the one surface of the friction plate 33. By the contact between the projections 31b, 31c and the friction plate 33, a frictional force is generated between the friction plate 33 and the plate spring 31. The friction force has an indirect influence on the hinge shaft 17 and the supporting bracket 15. Accordingly, when the panel 11 is opened more than 45°, the opening is enabled by an external force that overcomes the frictional force. When the pivoting is stopped, the panel 11 is fixed in position by the frictional force.

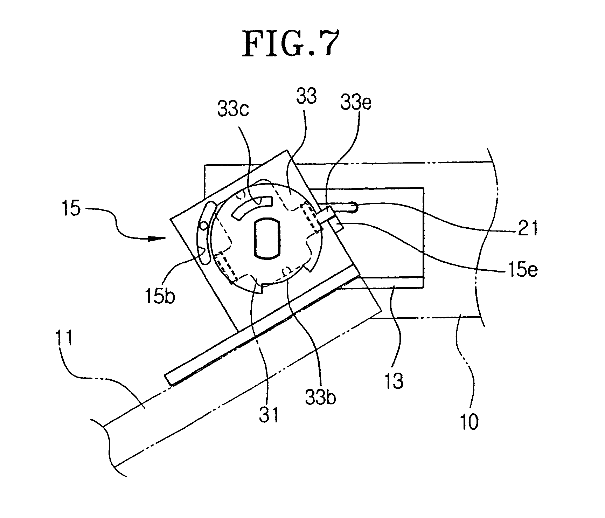

Figure 7 shows the panel 11 being rotated by approximately 210°. Here, the locking projection 15e is locked with the locking portion 33e, thereby restricting the supporting bracket 15 from further rotation. Here also, the panel end of the coil spring 21 is freely guided along the guide hole 15b, and the coil spring 21 is kept uncompression.

As described above, the hinge apparatus according to the present invention provides a first operation, which is automatic, and a second operation, which is manual. By simply releasing the locking device (e.g., like pressing a button), the panel 11 is automatically opened by a predetermined angle. As a result, a body of an appliance becomes easy to use. Also, a user is allowed to adjustably open the panel 11 within an angle ranging from, e.g. about 45° to 210°.

Also, as described above, the hinge apparatus according to the present invention enables pivoting movement of the supporting bracket 15 with respect to the fixing bracket 13 in a two operation manner. More specifically, since opening in the first operation is performed automatically, while the opening in the second operation is performed manually by the user, the appliance becomes easier to use.

## Claims

1. A hinge comprising:
first and second means (13, 15) for connecting the hinge to first and second structures (10, 11),
a shaft (17) fixed to said first means (13) and about which the second means (15) can rotate,
brake means (31, 33) for holding the first and second means (13, 15) to enable the first and second means to be set in position relative to each other, and
means (33b, 33c) arranged such that the brake means (31, 33) becomes operative at a predetermined angle between the first and second means (13, 15),
**characterised in that**
the brake means (31, 33) is mounted for rotation with the second means (15) and comprises a projection (31b), and
the means (33b, 33c) arranged such that the brake means becomes operative at a predetermined angle comprises a member (33) fixed relative to the shaft (17) and having a slot or cut-out (33b) for receiving said projection (31b) when the hinge is opened less than said predetermined angle,
said projection (31b) bearing against said member (33) to provide braking when the hinge is opened by said predetermined angle or a greater angle.

2. A hinge according to claim 1, comprising resilient means (21) for biasing the hinge, when closed, towards an open position.

3. A hinge according to claim 2, wherein the resilient means (21) comprises coil spring and the shaft (17) extends axially through the spring.

4. A hinge according to claim 2, comprising means (15b) for removing said bias substantially at said predetermined angle.

5. A hinge according to claim 4, wherein the resilient means (21) comprises coil spring, the shaft (17) extends axially through the spring and the means (15b) for removing said bias comprises a slot in the second means (15) receiving an end of the spring.

6. A hinge according to any preceding claim, wherein the brake means comprises a plate spring (31) fixed on and pivoted together with the second means (15) and said projection (31b) protrudes from one face of the plate spring (31) and said member (33) comprises a plate (33) fixed on the shaft in tight contact with the plate spring (31).

7. A hinge according to claim 6, wherein there are a pair of projections (31b, 31c) protruding from the plate spring (31), each member of said pair being at a different radial distance from the centre of rotation of the plate spring (31) and said member (33) has a slot or cut-out (33b, 33c) for receiving a respective one of said projections (31b, 31c) when the hinge is opened less than said predetermined angle.

8. A hinge according to claim 6, including a pivot angle restricting device (15e, 33e) to restrict the fully open angle of the hinge.

9. A hinge according to claim 8, wherein the pivot angle restricting device further comprises:
a locking portion (33e) protruding from the periphery of said member (33); and
a locking projection (15e) bent from an end of the second means (15) so as to contact the locking portion (33e) to set the limit of the rotation of the second means (15) relative to the first means (13).

10. A hinge according to claim 6, including a coil spring (21) biasing the hinge, when closed, towards an open position, wherein the shaft (17) comprises:
a middle cylindrical body (17a) supporting the coil spring;
a fixing portion (17b) extended from each end of the cylindrical body (17a), each having a non-circular section corresponding to a coupling hole (13a, 33a) having a non-circular section formed in respectively the first means (13) and said member (33); and
a radially projecting flange (17c) located at one end of said cylindrical body (17a) so as to bear against the second means (15).

11. A hinge according to claim 6, wherein the second means (15) has a shaft-receiving hole (15a) through which one end (17b) of the shaft (17) is passed and a guide hole (15b) in which one end of the coil spring (21) is received, the shaft-receiving hole (15a) being such that the second means (15) can rotate about the shaft (17).

12. A hinge according to any preceding claim, wherein said predetermined angle is 45°.

13. A hinge according to any preceding claim, wherein the fully open angle of the hinge is 210°.

## Patentansprüche

1. Scharnier, umfassend:
eine erste und zweite Einrichtung (13, 15) zum Verbinden des Scharniers mit einem ersten und einem zweiten Aufbau (10, 11),
eine Achse (17), die an der erstem Einrichtung (13) befestigt ist und um welche sich die zweite Einrichtung (15) drehen kann;
eine Bremseinrichtung (31, 33) zum Halten der ersten und zweiten Einrichtung (13, 15), um zu ermöglichen, die erste und zweite Einrichtung in einer Position relativ zueinander festzulegen, und
eine Einrichtung (33b, 33c), die derart angeordnet ist, dass die Bremseinrichtung (31, 33) in einem vorbestimmten Winkel zwischen der ersten und zweiten Einrichtung (13, 15) wirksam wird, **dadurch gekennzeichnet, dass**
die Bremseinrichtung (31, 33) zur Drehung mit der zweiten Einrichtung (15) angebracht ist und einen Vorsprung (31b) aufweist, und
die Einrichtung (33b, 33c), die derart angeordnet ist, dass die Bremseinrichtung in einem vorbestimmten Winkel wirksam wird, ein Element (33) aufweist, das relativ zu der Achse (17) feststehend befestigt ist und einen Schlitz oder eine Aussparung (33b) zum Aufnehmen des Vorsprungs (31b) aufweist, wenn das Scharnier weniger als den vorbestimmten Winkel geöffnet ist,
wobei der Vorsprung (31b) gegen das Element (33) drückt, um ein Bremsen bereitzustellen, wenn das Scharnier um den vorbestimmten Winkel oder einen größeren Winkel geöffnet ist.

2. Scharnier nach Anspruch 1, umfassend eine elastische Einrichtung (21) zum Vorspannen des Scharniers in Richtung einer geöffneten Position, wenn es geschlossen ist.

3. Scharnier nach Anspruch 2, bei dem die elastische Einrichtung (21) eine Schraubenfeder aufweist und sich die Achse (17) axial durch die Schraubenfeder erstreckt.

4. Scharnier nach Anspruch 2, umfassend eine Einrichtung (15b) zum Aufheben der Vorspannung im wesentlichen an dem vorbestimmten Winkel.

5. Scharnier nach Anspruch 4, bei dem die elastische Einrichtung (21) eine Schraubenfeder aufweist, sich die Achse (17) axial durch die Feder erstreckt und die Einrichtung (15b) zum Aufheben der Vorspannung einen Schlitz in der zweiten Einrichtung (15) aufweist, der ein Ende der Feder aufnimmt.

6. Scharnier nach einem der vorstehenden Ansprüche, bei dem die Bremseinrichtung eine Blattfeder (31) aufweist, die auf der zweiten Einrichtung (15) befestigt ist und zusammen mit dieser verschwenkt wird und der Vorsprung (31b) von einer Stirnseite der Blattfeder (31) vorragt und das Element (33) eine Platte (33) aufweist, die auf der Achse in engem Kontakt mit der Blattfeder (31) befestigt ist.

7. Scharnier nach Anspruch 6, bei dem ein Paar Vorsprünge (31b, 31c) vorgesehen ist, die von der Blattfeder (31) vorragen, wobei jedes Element des Paars in einem unterschiedlichen radialen Abstand von der Rotationsachse der Blattfeder (31) angeordnet ist und das Element (33) einen Schlitz oder eine Aussparung (33b, 33c) zum Aufnehmen eines entsprechenden der Vorsprünge (31b, 31c) aufweist, wenn das Scharnier weniger als den vorbestimmten Winkel geöffnet ist.

8. Scharnier nach Anspruch 6, umfassend eine den Verschwenkwinkel beschränkende Einrichtung (15e, 33e), um den vollständig geöffneten Winkel des Scharniers zu begrenzen.

9. Scharnier nach Anspruch 8, bei dem die den Verschwenkwinkel beschränkende Einrichtung ferner umfasst:
einen Verriegelungsabschnitt (33e), der von dem Umfang des Elements (33) vorragt; und
einen Verriegelungsvorsprung (15e), der von einem Ende der zweiten Einrichtung (15) gebogen ist, um mit dem Verriegelungsabschnitt (33e) in Kontakt zu kommen, um die Rotationsbegrenzung der zweiten Einrichtung (15) relativ zu der ersten Einrichtung (13) festzulegen.

10. Scharnier nach Anspruch 6, umfassend eine Schraubenfeder (21), die das Scharnier in Richtung einer geöffneten Position vorspannt wenn es geschlossen ist, wobei die Achse (17) umfasst:
einen zylindrischen Mittelkörper (17a), der die Schraubenfeder trägt;
einen Befestigungsabschnitt (17b), der sich von jedem Ende des zylindrischen Körpers (17a) erstreckt und jeweils einen nicht-kreisförmigen Querschnitt
entsprechend eines Kupplungslochs (13a, 33a) mit einem nicht-kreisförmigen Querschnitt, die entsprechend in der ersten Einrichtung (13) und dem Element (33) ausgebildet sind, aufweisen; und
einen radial vorragenden Flansch (17c), der an einem Ende des zylindrischen Körpers (17a) angeordnet ist, um gegen die zweite Einrichtung (15) zu drücken.

11. Scharnier nach Anspruch 6, bei dem die zweite Einrichtung (15) ein Achsaufnahmeloch, (15a) aufweist, durch welches ein Ende (17b) der Achse (17) durchgeführt ist und ein Führungsloch (15b), in dem ein Ende der Schraubenfeder (21) aufgenommen ist, wobei das Achsaufnahmeloch (15a) der Art ist, dass sich die zweite Einrichtung (15) um die Achse (17) drehen kann.

12. Scharnier nach einem der vorstehenden Ansprüche, bei dem der vorbestimmte Winkel 45° beträgt.

13. Scharnier nach einem der vorstehenden Anschlüsse, bei der vollständig geöffnete Winkel des Scharniers 210° beträgt.

## Revendications

1. Une charnière comprenant :
des premier et deuxième moyens (13, 15) pour connecter la charnière aux première et deuxième structures (10, 11),
un axe (17) fixé audit premier moyen (13) et autour duquel peut tourner le deuxième moyen (15),
des moyens de freinage (31, 33) pour retenir les premier et deuxième moyens (13, 15) pour permettre de placer les premier et deuxième moyens en position l'un relativement à l'autre, et
des moyens (33b, 33c) agencés de sorte que les moyens de freinage (31, 33) commencent à fonctionner à un angle prédéterminé entre le premier et le deuxième moyen (13, 15),
**caractérisée en ce que**
les moyens de freinage (31, 33) sont montés pour tourner avec le deuxième moyen (15) et comprennent une saillie (31b), et
les moyens (33b, 33c) agencés de manière à ce que les moyens de freinage commencent à fonctionner à un angle prédéterminé comprennent un élément (33) fixé relativement à l'axe (17) et ayant une fente ou découpe (33b) pour recevoir ladite saillie (31b) lorsque l'ouverture de la charnière est inférieure audit angle prédéterminé,
ladite saillie (31b) portant contre ledit élément (33) pour produire un freinage lorsque la charnière est ouverte selon ledit angle prédéterminé ou un angle supérieur à celui-ci.

2. Une charnière selon la revendication 1, qui comprend des moyens résilients (21) pour rappeler la charnière, lorsque fermée, vers une position ouverte.

3. Une charnière selon la revendication 2, dans laquelle les moyens résilients (21) comprennent un ressort à boudin, et l'axe (17) s'étend axialement à travers le ressort.

4. Une charnière selon la revendication 2, qui comprend des moyens (15b) pour éliminer sensiblement ledit rappel audit angle prédéterminé.

5. Une charnière selon le revendication 4, dans laquelle les moyens résilients (21) comprennent le ressort à boudin, l'axe (17) s'étend axialement à travers le ressort et les moyens (15b) d'élimination dudit rappel comprennent une fente dans le deuxième moyen (15), qui reçoit une extrémité du ressort.

6. Une charnière selon l'une quelconque des revendications précédentes, dans laquelle les moyens de freinage comprennent un ressort à lames (31) fixé sur le deuxième moyen (15) et qui pivote avec celui-ci, et ladite saillie (31b) dépasse d'une face du ressort à lames (31), et ledit élément (33) comprend une lame (33) fixée sur l'axe en contact étroit avec le ressort à lames (31).

7. Une charnière selon la revendication 6, dans laquelle une paire de saillies (31b, 31c) dépassent du ressort à lames (31), chaque élément de ladite paire étant à une distance radiale différente du centre de rotation du ressort à lames (31) et ledit élément (33) a une fente ou découpe (33b, 33c) pour recevoir respectivement l'une desdites saillies (31b, 31c) lorsque l'ouverture de la charnière est inférieure audit angle prédéterminé.

8. Une charnière selon la revendication 6, qui comprend un dispositif limiteur d'angle de pivotement (15e, 33e) pour limiter l'angle d'ouverture maximum de la charnière.

9. Une charnière selon la revendication 8, dans laquelle le dispositif limiteur d'angle de pivotement comprend de plus :
une partie de blocage (33e) qui fait saillie depuis la périphérie dudit élément (33) ; et
une saillie de blocage (15e) recourbée à partir d'une extrémité du deuxième moyen (15) de sorte à entrer en contact avec la partie de blocage (33e) pour régler la limite de rotation du deuxième moyen (15) relativement au premier moyen (13).

10. Une charnière selon la revendication 6, qui comprend un ressort à boudin (21) qui rappelle la charnière, lorsque fermée, vers une position ouverte, dans laquelle l'axe (17) comprend :
un corps cylindrique central (17a) qui supporte le ressort à boudin ;
une partie de fixation (17b) qui s'étend depuis chacune des extrémités du corps cylindrique (17a), chacune ayant une section non circulaire qui correspond à un trou d'accouplement (13a, 33a) ayant une section non circulaire, formés respectivement dans le premier moyen (13) et ledit élément (33) ; et
une bride radialement en saillie (17c) placée à une extrémité dudit corps cylindrique (17a) de sorte à porter contre le deuxième moyen (15).

11. Une charnière selon la revendication 6, dans laquelle le deuxième moyen (15) a un trou de réception d'axe (15a) à travers lequel passe une extrémité (17b) de l'axe (17), et un trou de guidage (15b) dans lequel est reçue une extrémité du ressort à boudin (21), le trou de réception d'axe (15a) étant tel que le deuxième moyen (15) peut tourner autour de l'axe (17).

12. Une charnière selon l'une quelconque des revendications précédentes, dans laquelle ledit angle prédéterminé égale 45°.

13. Une charnière selon l'une quelconque des revendications précédentes, dans laquelle l'angle d'ouverture maximum de la charnière égale 210°.
